# EUROPEAN PATENT SPECIFICATION

(11) **EP 2 985 506 B1**
(45) Date of publication and mention of the grant of the patent: **28.03.2018**
(21) Application number: 15179511.9
(22) Date of filing: 03.08.2015
(51) Int. Cl.: F16M 11/04, A47F 7/024, E05B 73/00, F16M 13/00, G06F 1/16, H04M 1/04

(54) **A MOUNT FOR A LAPTOP COMPUTER**
BEFESTIGUNG FÜR EINEN TRAGBAREN RECHNER
SUPPORT POUR UN ORDINATEUR PORTABLE

(30) Priority: 04.08.2014 GB 201413748
(43) Date of publication of application: 17.02.2016
(73) Proprietor: RDP Group (UK) Ltd, Burgess Hill West Sussex RH15 9TN (GB)
(72) Inventor: BEACH, Adrian Gordon, Burgess Hill, West Sussex RH15 9LR (GB); GRANTHAM-HILL, Robert George, Burgess Hill, West Sussex RH15 9LR (GB)
(74) Representative: Hutchins, Michael Richard

(56) References cited:
- ES-A1- 2 380 854
- GB-A- 2 362 423

## Description

This invention relates to a mount for a laptop computer, and more particularly to a mount which is adjustable to enable it to accommodate a range of different laptop computer sizes, and which is provided with means for securing the laptop to the mount to prevent unauthorised removal.

### Background of the Invention

Laptop computers are portable computers in which the processor, screen, keyboard and pointing device are all combined in a single unit. Typically, the laptop will have a hinged lid that contains a screen and a main body containing the processor, keyboard, pointing device and associated electronic components, as well as various ports for connection to external devices. The light weight and portability of laptop computers means that they are used widely in "field" settings rather than being confined to use in an office. For example, laptops are widely used in industrial settings, for monitoring or controlling manufacturing processes, and in hospitals and other settings where there is a need to move computers around on a frequent basis. In locations where there is little space available for a desk or table, for example in hospital wards, laptops are often mounted on a suitable supporting structure. The supporting structure can be a mobile structure such as a cart or trolley or a fixed structure such as a supporting arm that can be folded away when not required.

Various types of laptop mounts have previously been proposed and examples include the laptop mounts described in GB2490570, US6491276, US2003/0218113, US2011/0057006, US2001/226931, US2013/013/0193290 and WO2005/055780.

GB 2362423 A discloses and apparatus for securing an object on a shop display. The document discloses a device comprising two slotted plates, which are slidable with respect to one another and a lockable bar to prevent the object from being removed from the mount. The apparatus in GB 2362423 A is only expandable in a single direction and position of the lockable bar is not adjustable. Therefore, the sizes of the device which it can hold are limited.

ES 2380854 discloses an extensible support. The support comprises two platforms which are slidable with respect to each other. However, no means for securing a device onto the support is provided.

### The Invention

The present invention provides an improved mount for a laptop computer which can be expanded both longitudinally and laterally to enable it to accommodate a range of different laptop sizes. In addition, the mount is provided with releasable lockable security elements to prevent unauthorised removal of the laptop computer from the mounting structure.

Accordingly, in a first aspect, the invention provides a mount for a laptop computer, the mount comprising a mounting structure upon which the laptop computer can be mounted, the mounting structure having means for attachment to a supporting structure and means for holding the laptop computer in place on the mounting structure;
the mounting structure being reversibly expandable in both longitudinal and lateral directions to enable laptop computers of a plurality of different sizes to be mounted and held thereon;
wherein releasable fastening elements are provided to retain the mounting structure in a desired expanded or contracted configuration, the releasable fastening elements being accessible for adjustment to permit expansion or contraction of the mounting structure when the laptop computer is not mounted on the mounting structure but being concealed and not accessible for adjustment, thereby preventing expansion and contraction of the mounting structure, when the laptop computer is in place on the mounting structure;
and wherein one or more releasable lockable security elements are provided to prevent unauthorised removal of the laptop computer from the mounting structure.

The term "laptop computer" as used herein refers not only to portable computers of the type conventionally known as laptops but also includes other forms of portable computer that share with laptops a generally flat profile and have all of the required operating components (processor and means for inputting commands and data, and typically also a screen) in a single unit. The term therefore also encompasses smaller portable computers such as notebooks and tablets.

According to the invention, the mounting structure can be adjusted to give a desired expanded or contracted configuration to accommodate a laptop of a particular size and then the releasable fastening elements fastened to retain the mounting structure in that configuration. The laptop is then placed on the mounting structure and the releasable lockable security element(s) actuated to lock the laptop in place. Unauthorised removal of the laptop is therefore prevented. Because the releasable fastening elements are inaccessible once the laptop is locked in place on the mounting structure, it is not possible to remove the laptop from the mounting structure by expanding or contracting the mounting structure.

The mounting structure has means for attachment to a supporting structure. The supporting structure can be, for example, a free standing support structure, or a support for attachment to a wall or other upright surface. The supporting structure may comprise means for tilting the mounting structure about one or more axes and/or rotating the mounting structure. By way of example, the supporting structure can comprise a universal joint.

The means for attachment to the supporting structure can comprise a simple structure such as a threaded hole or holes enabling connection to the supporting structure, or one or more socket formations for receiving screws, bolts or other fastening elements associated with the supporting structure. Alternatively, the means for attachment to the supporting structure can be of more substantial construction and can take the form of a connecter such as a bracket or clamp or socket, or an arm that can be connected to the supporting structure.

The mounting structure has means for holding the laptop computer in place on the mounting structure. By "holding" is meant more than merely presenting a surface upon which the laptop can be placed. Thus, the means for holding the laptop computer in place is intended to prevent inadvertent detachment from the mount if, for example, the mount is tilted and/or rotated.

The means for holding the laptop in place can comprise one or more walls, edges, ribs, upstands or other formations that restrain the laptop against movement when the mount is tilted or rotated. The means for holding the laptop in place also comprise one or more formations that prevent the laptop from being lifted away from the mounting structure and prevent it from falling out if the mount is inverted.

Thus, the means for holding the laptop in place typically comprises one or more (and preferably a plurality) of formations that restrain the laptop against lateral or longitudinal movement with respect to the mounting structure, and one or more formations that overhang an upper surface of the laptop and thereby prevent movement away from the mounting structure.

The term "longitudinal" used herein refers to movement in a direction from the front edge (the edge opposite the hinge) of a laptop towards the rear edge (the edge where the hinge is located) and movement in the reverse direction, i.e. from the rear edge towards the front edge. The movement may be along a longitudinal axis that is substantially orthogonal to the front edge of the laptop or at an angle of less than 90° to the front edge of the laptop.

The term "lateral" as used herein refers to movement sideways with the respect to the longitudinal axis. The lateral movement may be in a direction substantially orthogonal (i.e. approximately 90°) to the longitudinal axis or at an angle of less than 90° to the longitudinal axis.

The mounting structure is reversibly expandable in both longitudinal and lateral directions to enable laptop computers of a plurality of different sizes to be mounted and held thereon.

The mounting structure can be reversibly and independently expandable in both longitudinal and lateral directions.

The mounting structure may comprise a mounting platform and one or more (typically a plurality) of ancillary platform elements movably (e.g. slidably) linked to the mounting platform so as to provide longitudinal and/or lateral relative movement therebetween.

The ancillary platform elements provide a means by which the mounting structure can be elongated or widened (or, in the reverse direction, contracted) to accommodate laptop computers of differing sizes.

The ancillary platform elements can take the form of, for example, further platform-like elements or arms having surfaces upon which the laptop can rest.

The mounting platform and ancillary platform elements are typically each provided with means for holding the laptop in place.

In one embodiment, the mounting structure comprises first and second mounting platforms and means for enabling the first and second mounting platforms to be slidably moved towards and away from one another, for example along a longitudinal axis.

The means for enabling the first and second mounting platforms to be slidably moved towards and away from one another can take the form of one more linking members linking the first and second mounting platforms, each linking member being anchored in one of the first and second mounting platforms and being slidable in the other of the first and second mounting platforms. Typically, there are two or more linking members linking the first and second mounting platforms.

Preferably, the first and second platforms are arranged so that there are no height differences between the upper surfaces thereof; i.e. there is no step between one platform and the other platform.

Each platform may comprise a plate upon which the laptop rests. The plate may be provided with one or more holes to permit air to circulate for cooling purposes. Alternatively, one or more of the platforms may have an open framework structure.

A platform may comprise upper and lower plates, an upper plate providing a surface upon which the laptop rests and a lower plate having means for attachment to a supporting structure. One or more sliding elements, such as sliding arms or sliding elements linking a platform to adjacent ancillary platform elements, may be mounted in channels formed between the upper and lower plates. For example, one of the plates (e.g. the lower plate) can have one or more machined channels for accommodating a sliding element.

Each of the first and second mounting platforms may have one or more (and preferably a plurality) of sliding arms, each of the sliding arms having means for engaging an edge and preferably also an upper surface of a laptop so as to hold the laptop against lateral and/or longitudinal movement.

Preferably, both the first and second mounting platforms have one or more (preferably a plurality of) sliding arms, slidably attached thereto.

In addition to holding the laptop against lateral and/or longitudinal movement, the sliding arms may also be provided with formations for preventing the laptop from being lifted away from the mounting structure. The formations may be movable or detachable to enable the laptop to be placed on the mount and movable or re-attachable to enable the laptop to be held in place.

In one embodiment, each of the first and second mounting platforms has a pair of sliding arms on opposing sides thereof, each of the sliding arms being arranged for lateral sliding movement with respect to the first or second mounting platforms. In this embodiment, it is preferred that each sliding arm is configured so as to restrain the laptop against longitudinal or lateral movement and to prevent the laptop from being lifted away from the mounting structure.

One or both of the first and second mounting platforms can comprise a sandwich structure in which the linking member(s) are held between two plates. In one embodiment, both the first and second mounting platforms have such a structure. One or both of the two plates in each case can be provided with a channel for receiving the linking members. The linking members can each be fixedly held in a channel in a plate or plates of one of the first and second mounting platforms and slidably held in a channel in a plate or plates of the other of the first and second mounting platforms.

One of the first and second mounting platforms may be larger in a longitudinal direction than the other. The linking members can be slidable in channels of the larger sliding linking member and fixedly held in channels or recesses of the other linking member.

In one embodiment, the first and second mounting platforms are linked by a pair of elongate substantially flat linking members. The linking members may be of substantially rectangular form although they may have radiussed corners or radiussed ends.

The mounting structure is provided with releasable fastening elements to retain the mounting structure in a desired expanded or contracted configuration. The releasable fastening elements are accessible for adjustment to permit expansion or contraction of the mounting structure when the laptop computer is not mounted on the mounting structure. However, when the laptop computer is in place on the mounting structure, the releasable fastening elements are concealed by the laptop and are not accessible for adjustment. Thus expansion and contraction of the mounting structure, when the laptop is in place, is prevented.

The releasable fastening elements can take various forms. They can, for example, take the form of clamping screws or bolts that can be screwed tightly against moving members within or on the mounting structure. Alternatively, they can take the form of screws or bolts that can be tightened to draw a clamping element into contact with moving members in or on the mounting stucture. In another embodiment, the releasable fastening elements can take the form of lugs or pegs that can be adjusted so that they move into engagement with or are retracted from holes or recesses or other detent formations in or on moving members within or on the mounting structure. The lugs or pegs can be, for example, spring loaded and biased into engagement with the detent formation.

The mount is provided with one or more releasable lockable security elements to prevent unauthorised removal of the laptop computer from the mounting structure.

The lockable security elements can take the form of, for example, a latch or bolt and associated key-operated lock. Alternatively, or additionally, the lockable security elements can take the form of or comprise security screws or bolts that require a special tool to tighten or release them. Such screws and bolts are commercially widely available.

The lockable security elements may be associated with formations for preventing the laptop from being lifted away from the mounting structure as hereinbefore defined. For example, where the formations are movable or detachable to enable the laptop to be placed on the mount, the lockable security elements may be configured to prevent such movement or detachment.

In another aspect, the invention provides a mount for a laptop computer as defined herein having a laptop computer attached thereto.

In a further aspect, the invention provides a combination of a mount for a laptop computer as defined herein and a supporting structure for supporting the mount above or away from a surface.

Further aspects and embodiments of the invention will be apparent from the specific description below and the drawings.

### Brief Description of the Drawings

Figure 1 is a plan view of a laptop mount according to one embodiment of the invention.
Figure 2 is a view from direction D1 in Figure 1.
Figure 3 is a view from direction D2 in Figure 1.
Figure 4 is a plan view corresponding to Figure 1 but wherein the front plates of the two mounting platforms, 4a and 4b, have been removed to show the interior layouts.
Figures 5A to 5C are perspective views showing the mount in various states of expansion or contraction.
Figure 6 is an exploded view showing the component parts of the mount.
Figure 7 is a rear view of the mount showing part of a supporting structure attached to the mount and showing a laptop in place on the mount.
Figure 8 is a plan view of a laptop mount according to a second embodiment of the invention.
Figure 9 is a plan view corresponding to Figure 8 but wherein the front plates of the two mounting platforms have been removed to show the interior layouts.
Figure 10 is an exploded view of the second embodiment of the invention showing the component parts of the mount.
Figure 11A and 11B are rear and front views respectively, showing the second embodiment of the invention with a laptop in place on the mount.

### Detailed Description of the Invention

The invention will now be described in more detail, but not limited, by reference to the specific embodiment illustrated in the drawings.

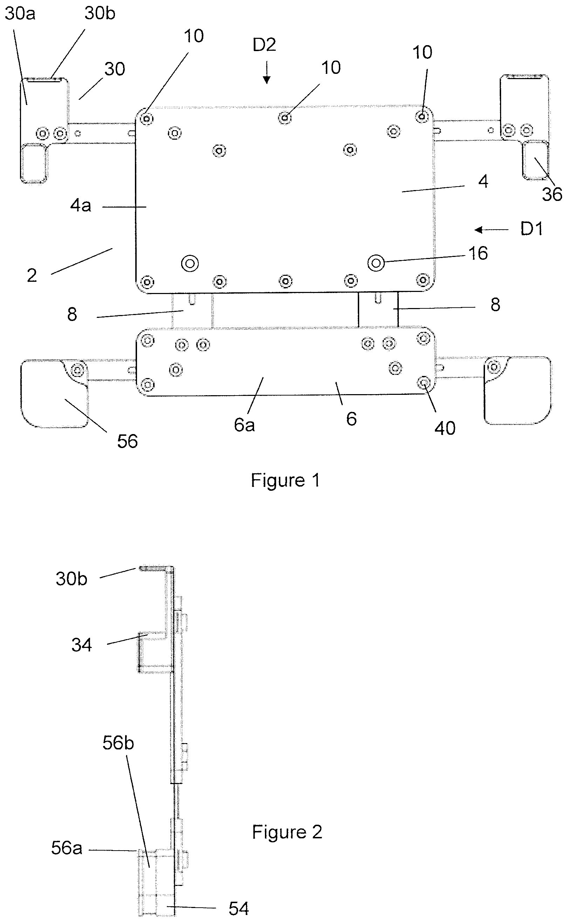

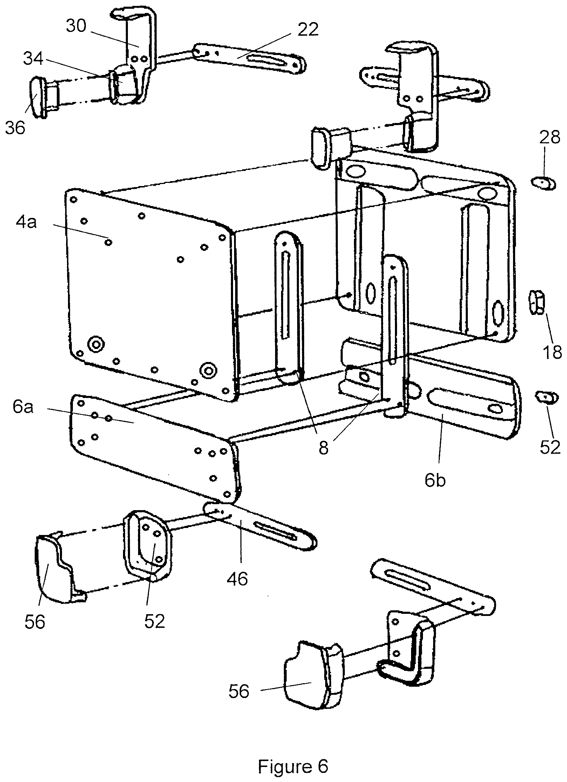

Referring now to the drawings, Figures 1 to 7 show a mount for a laptop according to one embodiment of the invention.

The mount comprises a mounting structure 2 upon which the laptop computer can be mounted. The mounting structure comprises a larger first mounting platform 4 and a smaller second mounting platform 6 linked by elongate sliding linking members 8. The first and second mounting platforms 4 and 6 together provide a surface for supporting the laptop computer.

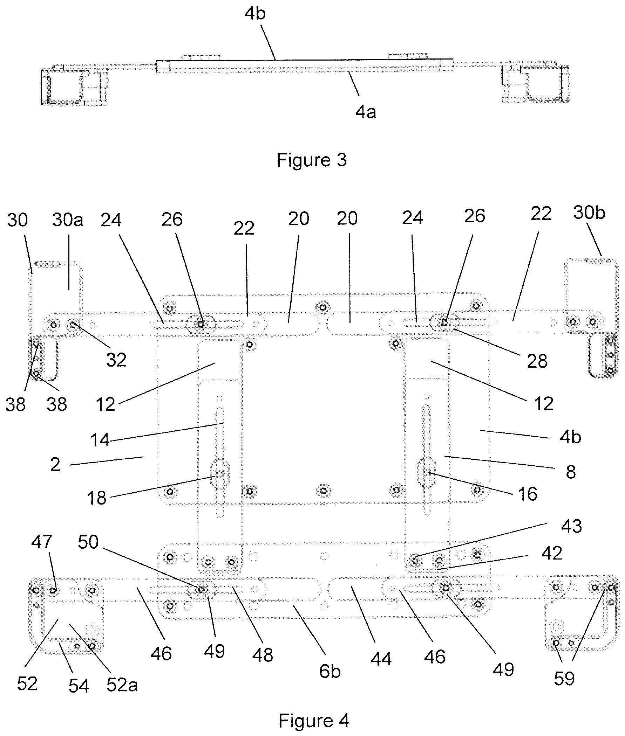

The first (and larger) mounting platform 4 comprises a pair of plates 4a and 4b secured together by means of countersunk screws 10 at spaced locations around the perimeter of the platform. The plates 4a and 4b can be formed, for example, from aluminium. As shown in Figure 4, the thicker plate 4b has a pair of parallel machined channels 12 extending from one edge of the platform in a longitudinal direction. The channels are open at one end and closed at the other end. The elongate sliding linking members 8 sit in and can slide along the channels 12.

Each of the linking members 8 has an elongate slot 14 along part of its length. The width of the slot is such as to accommodate the shank of a screw 16 which is set into a countersunk or counterbored hole through the plate 4a. The end of the shank of the screw 16 is received in a threaded bore in an oval-shaped clamping block 18 which is seated in a correspondingly oval shaped hole in the bottom of the channel 12. The clamping block is formed from machined aluminium.

The screw 16 and clamping block 18 together function as a releasable fastening element. Tightening the screw 16 against the clamping block 18 brings the surface of the clamping block 18 into gripping contact with the surface of the linking member 8 either side of the slot 14 thereby preventing the linking member from moving.

The plate 4b also has a pair of lateral machined channels 20 extending in opposing directions near to the distal end of the plate. Mounted in the channels 20 are sliding arms 22. In an analogous manner to the linking members 8, the sliding arms 22 have elongate slots 24, the width of which is such as to accommodate the shank of a screw 26 which is set into a countersunk or counterbored hole through the plate 4a. The end of the shank of the screw 26 is received in a threaded bore in an oval-shaped clamping block 28 which is seated in a correspondingly oval shaped hole in the bottom of the channel 20. The screw 26 and clamping block 28 together act as releasable fastening means in the same manner as the screw 16 and clamping block 18. Thus the releasable fastening means can be used to hold the sliding arm at a desired location in the channel 20.

To the outer end of each sliding arm 22 is attached a "hand" assembly for holding the laptop in place. The "hand" assembly comprises an aluminium machined element 30 which is secured to the sliding arm 22 by means of screws 32 (although rivets may be used instead). The element 30 has a flat region 30a, an upstanding wall 30b and a socket formation 34. A "plug" 36 is located inside the socket formation 34 and is held in place by security screws 38 through holes in the underside of the element 30. The plug has a flange 36a extending outwardly from its upper end.

When a laptop computer is positioned on the mounting structure, longitudinal and lateral movement are restrained by the upstanding wall 30b and the socket formation 34 respectively. The plug 36 is inserted into the socket formation 34 so that the flange 36a overlies the edge of the upper surface of the computer and is locked in place by means of the security screws 38. The flange 36a prevents the computer from being lifted away from the mounting structure. Plugs 36 of different lengths can be provided to enable laptop computers of varying depths to be accommodated on the mount.

The height of the upstanding wall 30b is less than the typical depth of a laptop computer and therefore does not bear against the hinge of the laptop and restrict movement (e.g. tilting) of the laptop screen. The spacing between the socket formation 34 and the upstanding wall 30b is designed to provide access to the various connector sockets typically found near to the corners of laptop computers.

The smaller second mounting platform 6 has a similar form of construction to the larger first mounting platform 4 in that it comprises a pair of aluminium plates 6a and 6b fastened together around their peripheries by means of screws or rivets 40. Short longitudinally extending channels or recesses 42 in plate 6b accommodate the ends of the elongate linking members 8. The ends of the linking members 8 are fixed in place by means of fastening screws or rivets 43 through aligned holes in the plate 6b and linking member 8.

The plate 6b also has a pair of lateral channels 44 in which are mounted sliding arms 46. In an analogous manner to the sliding arms in the larger first mounting platform 4, the sliding arms 46 have elongate slots 48, the width of which is such as to accommodate the shank of a screw 50 which is set into a countersunk or counterbored hole through the plate 6a. The end of the shank of the screw 50 is received in a threaded bore in an oval-shaped clamping block 49 which is seated in a correspondingly oval shaped hole in the bottom of the channel 44. The screw 50 and clamping block 49 together act as releasable fastening means in the same manner as the screw 26 and clamping block 28 on the first mounting platform 4.

Attached to the outer end of each arm 46 by means of screws of rivets 47 is a metal (e.g. aluminium) corner block 52 which has a flat portion 52a for supporting the corner of a laptop and an L-shaped socket formation 54. Received within the L-shaped socket formation 54 is a corner covering member 56 which has a flat cover plate portion 56a and an L-shaped plug portion 56b. The lower surface of the L-shaped plug portion 56b is provided with a pair of threaded holes (not shown) that are aligned with holes in the bottom of the socket formation 54 of the casting 52. The L-shaped plug portion 56b fits inside the L-shaped socket formation 54 and can be secured in place by security screws 59.

When a laptop computer is placed on the mount, the front corners of the laptop are placed up against the L-shaped socket formation. The walls of the L-shaped socket formation 54 restrain the laptop against lateral and longitudinal movement. The corner covering member 56 is then fitted into the socket formation 54 and the security screws 59 are screwed into place. The cover plate portion 56a prevents the laptop from being lifted away from the mounting structure. Thus, the combination of corner cover plate and security screws constitutes a releasable lockable security element as defined above.

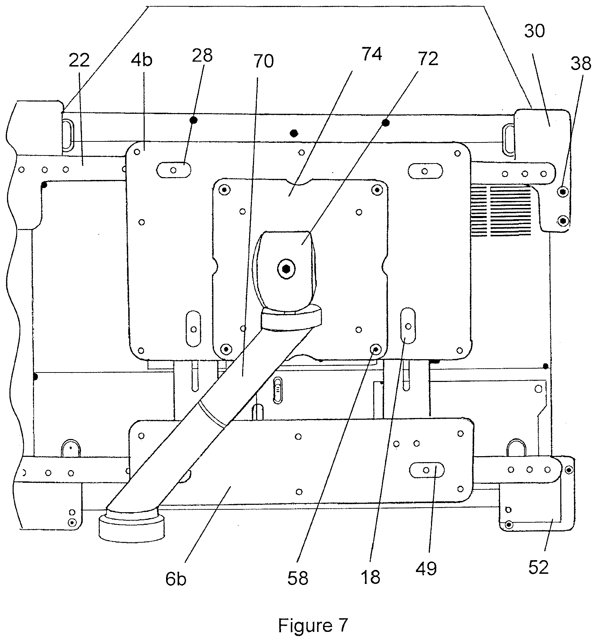

The underside of the plate 4b of the first mounting platform is provided with an array of threaded holes 58 that enable the mount to be secured to a supporting structure such as a supporting arm. As shown in Figure 7, a plate 74 of a supporting structure is attached to the underside of the first mounting platform 4. The plate 74 is attached through joint 72 to an arm 70 which can be part of a free standing supporting structure or can be mounted on a wall or other surface.

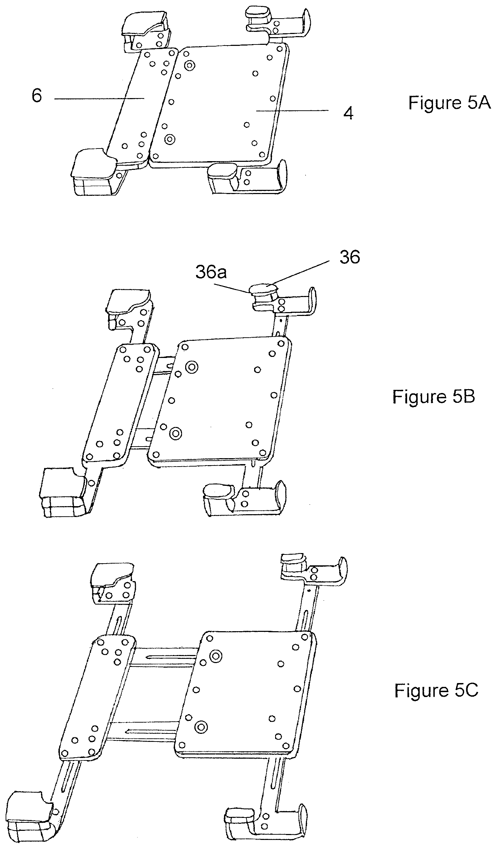

In use, the mount is first set up to accommodate a particular laptop computer. Thus, the security screws 38 and 59 and the plugs 36 and corner covering members 56 are removed. The screws 16, 26 and 50 are then loosened so that the linking members 8 and the arms 22 and 46 can slide in their respective channels. The laptop is then placed on the mount, and the first and second mounting platforms and element 30 and corner block 52 are then moved together or apart as necessary so that the corners of the laptop firmly abut against the upstanding walls 30b and socket formations 34 of the element 30 and the walls of the socket formation 54. The laptop is then lifted off of the mount and the screws 16, 26 and 50 re-tightened to hold the mounting structure in the required configuration. Figures 5A, 5B and 5C shown the mount in various degrees of expansion with Figure 5A showing the fully contracted state and Figure 5C showing the fully expanded state.

Once the mount has been configured, the laptop is then placed back on the mounting structure and the plugs 36 and corner covering members 56 refitted. Finally, the security screws 38 and 59 are screwed back into the castings 30 and 52 to lock the plugs 36 and corner covering members 56 in place. The laptop cannot then be removed from the mount without using a security key to remove the security screws.

Figure 7 shows the mount with a laptop *in situ.*

It will be appreciated from the above description that the laptop mount of the invention provides a secure method of mounting a laptop such that it cannot readily be removed by unauthorised personnel. The security screws prevent the laptop from being lifted off of the mount and therefore the releasable fastening elements, which are inaccessible because they are covered by the laptop, cannot be loosened to permit the two mounting platforms and/or the arms 22 and 46 to be moved to release the laptop.

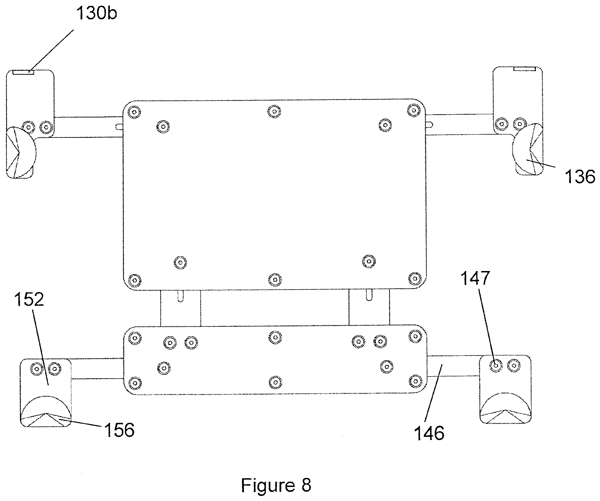

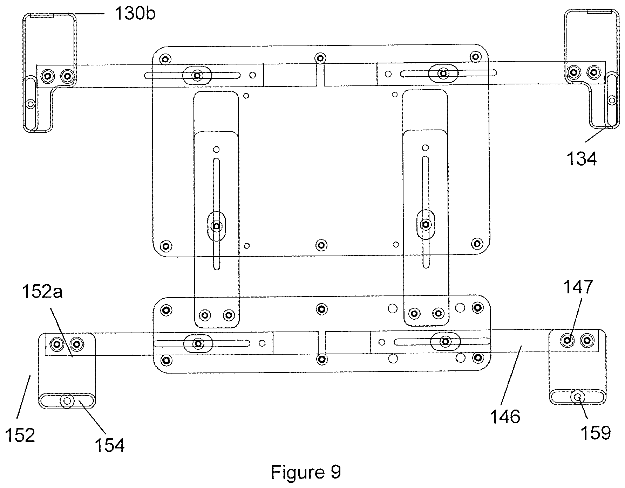

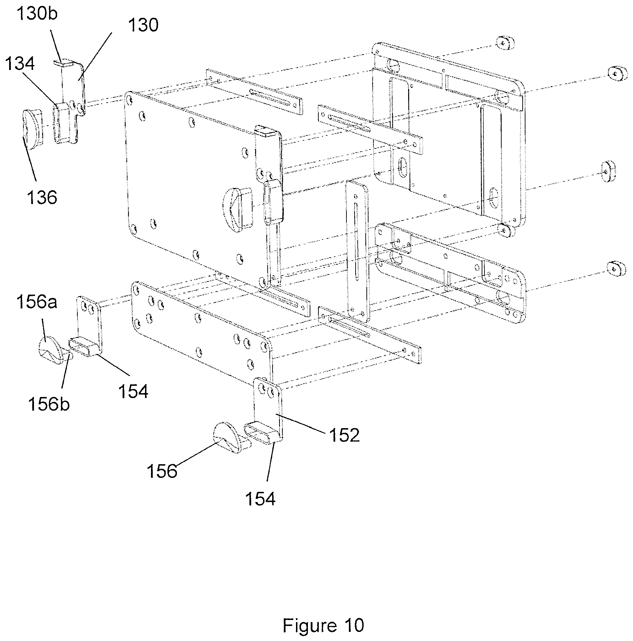

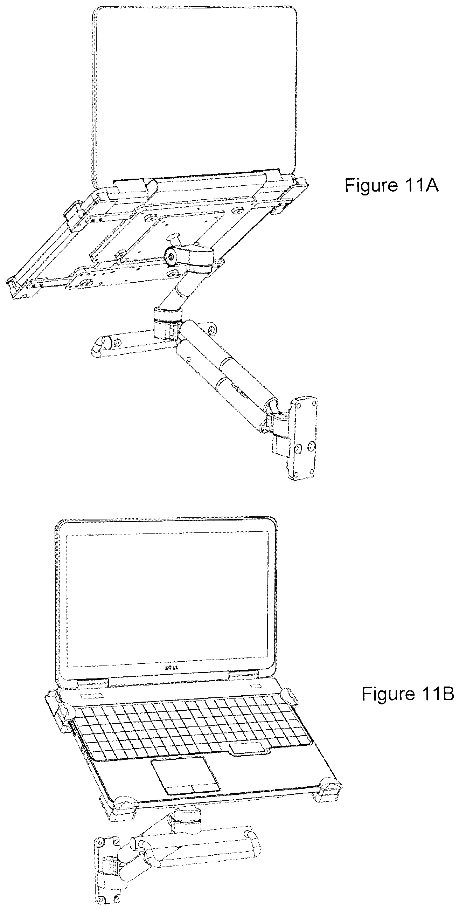

Figures 8 to 11 show a second embodiment of the invention having the same general structure as the embodiment shown in Figures 1 to 7, except that the releasable lockable security elements vary in their shape and structure. In this embodiment, attached to the outer end of each arm 146 by means of screws of rivets 147 is a metal (e.g. aluminium) block 152 which has a flat portion 152a for supporting one side of a laptop and a socket formation 154. Received within the socket formation 154 is a plug 156 which has a flat cover plate portion 156a and a plug portion 156b. The lower surface of the plug portion 156b is provided with a pair of threaded holes (not shown) that are aligned with holes in the bottom of the socket formation 154 of the block 152. The plug portion 156b fits inside the socket formation 154 and can be secured in place by security screws 159.

When a laptop computer is placed on the mount, the front edge of the laptop is placed up against the socket formations 154. The walls of the socket formations 154 and upstanding wall 130b restrain the laptop against longitudinal movement and the walls of socket formations 134 restrain the laptop against lateral movement. Plugs 136 and 156 are then fitted into socket formations 134 and 154 respectively and the security screws are screwed into place. The cover plate portions of the plugs 136a and 156a prevent the laptop from being lifted away from the mounting structure. Thus, the combination of cover plate and security screws constitutes a releasable lockable security element as defined above.

## Claims

1. A mount for a laptop computer, the mount comprising a mounting structure (2) upon which the laptop computer can be mounted, wherein the mounting structure comprises first (4) and second (6) mounting platforms and means for enabling the first and second mounting platforms to be slidably moved towards and away from one another along the longitudinal axis (8);
the mounting structure (2) having means for attachment to a supporting structure (58) and means for holding the laptop computer in place on the mounting structure (36, 56, 30b);
the mounting structure (2) being reversibly and independently expandable in both longitudinal and lateral directions to enable laptop computers of a plurality of different sizes to be mounted and held thereon;
wherein releasable fastening elements (16, 18, 26, 28, 50, 49) are provided to retain the mounting structure in a desired expanded or contracted configuration, the releasable fastening elements (16, 18, 26, 28, 50, 49) being accessible for adjustment to permit expansion or contraction of the mounting structure (2) when the laptop computer is not mounted on the mounting structure (2) but being concealed and not accessible for adjustment, thereby preventing expansion and contraction of the mounting structure, when the laptop computer is in place on the mounting structure (2); and
wherein one or more releasable lockable security elements (38, 59) are provided to prevent unauthorised removal of the laptop computer from the mounting structure (2).

2. A mount for a laptop computer according to claim 1 wherein the means for enabling the first and second mounting platforms to be slidably moved towards and away from one another takes the form of one more linking members (8) linking the first and second mounting platforms, each linking member being anchored in one of the first and second mounting platforms and being slidable in the other of the first and second mounting platforms.

3. A mount for a laptop computer according to claim 2 wherein there are two or more linking members linking the first and second mounting platforms.

4. A mount for a laptop computer according to any one of the preceding claims wherein each of the first and second mounting platforms has one or more sliding arms (22, 46), each of the sliding arms having means for engaging an edge and also an upper surface of a laptop so as to hold the laptop against lateral and/or longitudinal movement.

5. A mount for a laptop computer according to claim 4 wherein each mounting platform has a plurality of sliding arms.

6. A mount for a laptop computer according to claim 5 wherein each of the first and second mounting platforms has a pair of sliding arms on opposing sides thereof, each of the sliding arms being arranged for lateral sliding movement with respect to the first or second mounting platforms.

7. A mount for a laptop computer according to claim 6 wherein each sliding arm is configured so as to restrain the laptop against longitudinal or lateral movement and to prevent the laptop from being lifted away from the mounting structure.

8. A mount for a laptop computer as defined in any one of claims 1 to 7 having a laptop computer attached thereto.

9. A combination of a mount for a laptop computer as defined in any one of claims 1 to 7 and a supporting structure for supporting the mount above or away from a surface.

## Patentansprüche

1. Halterung für einen Laptop-Computer, wobei die Halterung eine Halterstruktur (2) umfasst, auf welcher der Laptop-Computer angebracht werden kann, wobei die Halterstruktur eine erste (4) und zweite (6) Halterplattform und Mittel, um der ersten und zweiten Halterplattform zu ermöglichen, verschiebbar in Richtung zueinander und weg voneinander entlang der Längsachse (8) bewegt zu werden, umfasst;
wobei die Halterstruktur (2) Mittel zur Anbringung an einer Stützstruktur (58) und Mittel, um den Laptop-Computer an der Halterstruktur (36, 56, 30b) an Ort und Stelle zu halten, aufweist; wobei die Halterstruktur (2) umkehrbar und unabhängig sowohl in Längs- als auch in Seitenrichtungen erweiterbar ist, um zu ermöglichen, dass Laptop-Computer in einer Vielzahl von verschiedenen Größen daran angebracht und gehalten werden können;
wobei lösbare Befestigungselemente (16, 18, 26, 28, 50, 49) bereitgestellt sind, um die Halterstruktur in einer gewünschten erweiterten oder zusammengezogenen Anordnung zu halten,
wobei die lösbaren Befestigungselemente (16, 18, 26, 28, 50, 49) zur Anpassung zugänglich sind, um das Erweitern oder Zusammenziehen der Halterstruktur (2) zu ermöglichen, wenn der Laptop-Computer nicht an der Halterstruktur (2) angebracht ist, aber verdeckt und nicht zur Anpassung zugänglich sind, wenn sich der Laptop-Computer an der Halterstruktur (2) an Ort und Stelle befindet, wodurch das Erweitern und Zusammenziehen der Halterstruktur verhindert wird; und
wobei ein oder mehrere lösbare verriegelbare Sicherheitselemente (38, 59) bereitgestellt sind, um die nicht autorisierte Entfernung des Laptop-Computers von der Halterstruktur (2) zu verhindern.

2. Halterung für einen Laptop-Computer nach Anspruch 1, wobei das Mittel, um der ersten und zweiten Halterplattform zu ermöglichen, verschiebbar in Richtung zueinander und weg voneinander bewegt zu werden, die Form eines oder mehrerer Verbindungselemente (8) annimmt, welche die erste und zweite Halterplattform verbinden, wobei jedes Verbindungselement in einer von der ersten und zweiten Halterplattform verankert ist und in der anderen von der ersten und zweiten Halterplattform verschiebbar ist.

3. Halterung für einen Laptop-Computer nach Anspruch 2, wobei es zwei oder mehrere Verbindungselemente gibt, welche die erste und zweite Halterplattform verbinden.

4. Halterung für einen Laptop-Computer nach einem der vorhergehenden Ansprüche, wobei jede von der ersten und zweiten Halterplattform einen oder mehrere Schiebearme (22, 46) aufweist, wobei jeder der Schiebearme Mittel aufweist, um eine Kante und auch eine Oberseite eines Laptops in Eingriff zu nehmen, um den Laptop entgegen seitlicher und/oder länglicher Bewegung zu halten.

5. Halterung für einen Laptop-Computer nach Anspruch 4, wobei jede Halterplattform eine Vielzahl von Schiebearmen aufweist.

6. Halterung für einen Laptop-Computer nach Anspruch 5, wobei jede von der ersten und zweiten Halterplattform ein Paar an Schiebearmen an gegenüberliegenden Seiten davon aufweist, wobei jeder der Schiebearme zur seitlichen Schiebebewegung in Bezug auf die erste oder zweite Halterplattform angeordnet ist.

7. Halterung für einen Laptop-Computer nach Anspruch 6, wobei jeder Schiebearm ausgelegt ist, um den Laptop gegenüber länglicher oder seitlicher Bewegung zurückzuhalten und zu verhindern, dass der Laptop von der Halterstruktur weggehoben wird.

8. Halterung für einen Laptop-Computer nach einem der Ansprüche 1 bis 7, die einen daran angebrachten Laptop-Computer aufweist.

9. Kombination aus einer Halterung für einen Laptop-Computer nach einem der Ansprüche 1 bis 7 und einer Stützstruktur zum Stützen der Halterung über oder weg von einer Fläche.

## Revendications

1. Support d'ordinateur portable, le support comprenant une structure de montage (2) sur laquelle l'ordinateur portable peut être monté, dans lequel la structure de montage comprend des première (4) et seconde (6) plateformes de montage et un moyen permettant aux première et seconde plateformes de montage d'être déplacées par coulissement vers et en éloignement l'une de l'autre le long de l'axe longitudinal (8) ;
la structure de montage (2) possédant un moyen de fixation à une structure de support (58) et un moyen de maintien de l'ordinateur portable en place sur la structure de montage (36,56,30b);
la structure de montage (2) étant extensible de manière réversible et indépendante à la fois dans les directions longitudinale et latérale pour permettre à des ordinateurs portables d'une pluralité de tailles différentes d'être montés et maintenus sur celle-ci ;
dans lequel des éléments de fixation détachables (16, 18, 26, 28, 50, 49) sont prévus pour retenir la structure de montage dans une configuration étendue ou contractée souhaitée, les éléments de fixation détachables (16, 18, 26, 28, 50, 49) étant accessibles pour ajustement afin de permettre une extension ou une contraction de la structure de montage (2) quand l'ordinateur portable n'est pas monté sur la structure de montage (2) mais étant cachés et non accessibles pour ajustement, empêchant de la sorte l'expansion et la contraction de la structure de montage, quand l'ordinateur portable est en place sur la structure de montage (2) ;
et dans laquelle un ou plusieurs éléments de sécurité verrouillables détachables (38, 59) sont prévus pour empêcher un retrait non autorisé de l'ordinateur portable de la structure de montage (2).

2. Support d'ordinateur portable selon la revendication 1, dans lequel le moyen permettant aux première et seconde plateformes de montage d'être déplacées par coulissement vers et en éloignement l'une de l'autre prend la forme d'un ou plusieurs éléments de raccord (8) raccordant la première et la seconde plateformes de montage, chaque élément de raccord étant ancré dans l'une de la première et la seconde plateformes de montage et étant coulissant dans l'autre de la première et la seconde plateformes de montage.

3. Support d'ordinateur portable selon la revendication 2, dans lequel deux éléments de raccord ou plus raccordent la première et la seconde plateformes de montage.

4. Support d'ordinateur portable selon l'une quelconque des revendications précédentes, dans lequel chacune de la première et la seconde plateformes de montage possède un ou plusieurs bras coulissants (22, 46), chacun des bras coulissants possédant un moyen de prise avec un bord et une surface supérieure d'un ordinateur portable de manière à maintenir l'ordinateur portable et empêcher son déplacement latéral et/ou longitudinal.

5. Support d'ordinateur portable selon la revendication 4, dans lequel chaque plateforme de montage possède une pluralité de bras coulissants.

6. Support d'ordinateur portable selon la revendication 5, dans lequel chacune de la première et la seconde plateformes de montage possède une paire de bras coulissants sur les côtés opposés de celles-ci, chacun des bras coulissants étant agencé pour un déplacement coulissant latéral par rapport à la première ou la seconde plateformes de montage.

7. Support d'ordinateur portable selon la revendication 6, dans lequel chaque bras coulissant est configuré de manière à restreindre l'ordinateur portable contre un déplacement longitudinal ou latéral et à empêcher l'ordinateur portable d'être soulevé et détaché de la structure de montage.

8. Support d'ordinateur portable selon l'une quelconque des revendications 1 à 7, possédant un ordinateur portable attaché à celui-ci.

9. Combinaison d'un support d'ordinateur portable selon l'une quelconque des revendications 1 à 7 et d'une structure de support destinée à supporter le support au-dessus et à distance d'une surface.
